# EUROPÄISCHE PATENTSCHRIFT

(11) **EP 3 597 926 B1**
(45) Veröffentlichungstag und Bekanntmachung des Hinweises auf die Patenterteilung: **19.05.2021**
(21) Anmeldenummer: 18209471.4
(22) Anmeldetag: 30.11.2018
(51) Int. Cl.: F04D 19/04, F04D 29/049, F04D 29/52, F04D 29/063

(54) **VAKUUMPUMPE**
VACUUM PUMP
POMPE À VIDE

(43) Veröffentlichungstag der Anmeldung: 22.01.2020
(73) Patentinhaber: PFEIFFER VACUUM GMBH, 35614 Asslar (DE)
(72) Erfinder: Mekota, Mirko, 35630 Ehringshausen (DE); Schweighöfer, Michael, 35641 Schöffengrund (DE)
(74) Vertreter: Manitz Finsterwald Patent- und Rechtsanwaltspartnerschaft mbB

(56) Entgegenhaltungen:
- EP-A1- 3 106 691
- EP-A2- 1 921 322
- WO-A1-2018/025023
- US-A- 4 181 379

## Beschreibung

Die vorliegende Erfindung betrifft allgemein die Konstruktion einer Lagerung einer Vakuumpumpe, insbesondere einer Turbomolekularpumpe. Insbesondere betrifft die Erfindung eine Vakuumpumpe, insbesondere Turbomolekularpumpe, mit einem Gehäuseelement, einem Rotor, der mit seiner Längserstreckung eine axiale Richtung definiert, und einem für den Rotor vorgesehenen Lagerelement, wobei das Lagerelement in einer Öffnung des Gehäuseelements angeordnet ist, und wobei Mittel zur Positionierung des Lagerelement relativ zum Gehäuseelement vorgesehen sind.

Konkret betrifft die Erfindung eine Vakuumpumpe nach dem Oberbegriff des Anspruchs 1. Eine solche ist in der EP 3 106 691 A1 offenbart. Weiteren Stand der Technik bilden die WO 2018/025023 A1, die EP 1 921 322 A1 und die US 4,181,379 A.

Es ist eine Aufgabe der Erfindung, eine Vakuumpumpe der eingangs beschriebenen Art mit einer einfach und/oder unter geringem Materialaufwand herstellbaren Lagerung zu beschreiben.

Diese Aufgabe wird durch eine Vakuumpumpe mit den Merkmalen gemäß Anspruch 1 gelöst, und insbesondere dadurch, dass zur Positionierung des Lagerelements relativ zum Gehäuseelement wenigstens ein vom Gehäuseelement separates erstes Bauteil, insbesondere eine Lagerfassung, vorgesehen ist, wobei die Öffnung wenigstens einen ersten zylindrischen Axialabschnitt mit konstantem Querschnitt aufweist, wobei das erste Bauteil im ersten Axialabschnitt der Öffnung angeordnet ist, wobei das erste Bauteil mit seinem Querschnitt radial ausschließlich innerhalb des Querschnitts der Öffnung im ersten Axialabschnitt angeordnet ist, wobei das erste Bauteil mittels wenigstens eines platten- und/oder scheibenförmigen Befestigungselements in der Öffnung befestigt ist, und wobei sich das Befestigungselement radial sowohl innerhalb des Querschnitts als auch außerhalb des Querschnitts des ersten Axialbereiches erstreckt.

Hierdurch wird die Befestigungsfunktion vorteilhaft von einer weiteren Funktion des ersten Bauteils, insbesondere Begrenzung eines Lagerelements, Zentrierung relativ zum Gehäuseelement und/oder Planausrichtung des ersten Bauteils und/oder einer Lagerfassung relativ zum Gehäuseelement, getrennt. Insbesondere ist das Befestigungselement und/oder das erste Bauteil derart ausgebildet, dass das Befestigungselement das erste Bauteil und/oder eine Lagerfassung ausschließlich axial beaufschlagt. Vorzugsweise erfolgt dabei eine Planausrichtung des ersten Bauteils und/oder einer Lagerfassung nicht durch eine am Befestigungselement ausgebildete Anlage, sondern insbesondere durch eine an der Lagerfassung, insbesondere an einem zweiten Bauteil, ausgebildete Anlage.

Durch die Funktionstrennung können das Befestigungselement und das erste Bauteil im Wesentlichen unabhängig voneinander in Bezug auf ihren Querschnitt dimensioniert und bearbeitet werden. Im Ergebnis hat das erste Bauteil nur einen geringen maximalen Durchmesser bzw. Querschnitt im Vergleich zum Befestigungselement. Das erste Bauteil kann somit aus einem Rohteil mit ebenfalls kleinem Querschnitt bzw. Durchmesser hergestellt werden. Veranschaulichend kann ein Vergleich zu anderen Konstruktionen betrachtet werden, bei denen ein erstes Bauteil einen Befestigungsflansch oder Haltebund aufweist, der in seinem Querschnitt größer ist als ein Öffnungsquerschnitt, in dem das Bauteil angeordnet ist. Der Befestigungsflansch macht es bei spanender Herstellung nötig, dass ein Rohteil einen entsprechend großen Querschnitt bzw. Durchmesser aufweist. Allerdings bleibt dieser nur im Bereich des Flansches bestehen, während für den Bereich mit geringerem Querschnitt viel Material, insbesondere spanend, abgenommen werden muss. Die Erfindung ermöglicht somit eine erhebliche Materialeinsparung zumindest bei der Herstellung des ersten Bauteils, was sich nicht nur kostengünstig, sondern auch umweltschonend auswirkt. Das Befestigungselement hingegen kann ebenfalls unter geringem Materialaufwand hergestellt werden, da zwar ein Rohteil mit relativ großem Querschnitt bereitzustellen ist, hiervon aber nur wenig oder vorteilhaft kein Material abgenommen werden muss.

Das erste Bauteil kann zumindest teilweise im ersten Axialabschnitt angeordnet sein. Es muss also in axialer Richtung nicht auf den ersten Axialabschnitt begrenzt sein. Das Befestigungselement befestigt und/oder beaufschlagt das erste Bauteil insbesondere in axialer Richtung, insbesondere ausschließlich.

Insbesondere kann das erste Bauteil frei von einem Befestigungsflansch und/oder Haltebund zur Befestigung am Gehäuseelement sein. Bei einem vorteilhaften Beispiel ist das erste Bauteil in die Öffnung eingelegt und durch das Befestigungselement festgelegt, insbesondere axial, insbesondere gegen ein weiteres Bauteil und/oder zumindest mittelbar gegen eine Schulter des Gehäuseelements.

Das Befestigungselement kann insbesondere das erste Bauteil wenigstens mittelbar an einer axialen Stirnseite desselben beaufschlagen. Es kann beispielsweise eine zusätzliche Scheibe zwischen dem Befestigungselement und dem ersten Bauteil vorgesehen sein. Alternativ kann das Befestigungselement unmittelbar an dem ersten Bauteil anliegen.

Bei dem Gehäuseelement kann es sich vorteilhaft um ein Gehäuseunterteil und/oder eine Gehäusebasis handeln. Alternativ oder zusätzlich kann das Gehäuseelement einen Stator eines Motors der Vakuumpumpe tragen oder bilden.

Das erste Bauteil kann gemäß einem weiteren Beispiel Teil einer vom Gehäuseelement separaten, insbesondere herausnehmbaren, Lagerfassung sein. Das Befestigungselement kann insbesondere die Lagerfassung axial festlegen, insbesondere gegen das Gehäuseelement, insbesondere eine Schulter hiervon. Alternativ oder zusätzlich kann das Befestigungselement die Lagerfassung als ganzes befestigen und/oder festlegen, insbesondere in axialer Richtung.

Gemäß einer Ausführungsform ist vorgesehen, dass das Befestigungselement als Blech- und/oder Stanzteil ausgebildet ist. Ein solches lässt sich besonders einfach und kostengünstig herstellen und unter nur geringer Materialabnahme bearbeiten. Es wird hierdurch vorteilhaft ausgenutzt, dass durch ein entsprechendes Rohteil material- und kostengünstig ein großer Querschnitt bereitgestellt werden kann.

Vorzugsweise ist das Befestigungselement am Gehäuseelement befestigt, insbesondere mit diesem verschraubt, insbesondere außerhalb des Querschnitts des ersten Axialbereichs.

Insbesondere vorteilhaft ist es, wenn das Befestigungselement eine Mehrzahl an, insbesondere radialen, Vorsprüngen aufweist, mit denen sich das Befestigungselement insbesondere außerhalb des Querschnitts des ersten Axialbereichs erstreckt und/oder die als Befestigungspunkte, insbesondere für eine Befestigung am Gehäuseelement, dienen. Durch den jeweiligen Vorsprung ist am Vorsprung bzw. Befestigungspunkt eine erhöhte Elastizität im Vergleich zu einer einfachen Scheibe erreicht. Hierdurch kann vorteilhaft gewährleistet werden, dass das Befestigungselement das erste Bauteil und/oder eine Lagerfassung zumindest im Wesentlichen ausschließlich axial festlegt, nicht aber an deren Planausrichtung beteiligt ist. Dies kann vorteilhaft durch eine zusätzliche Zentrierung erfolgen. Hierdurch lassen sich eine besonders gut definierte Montage und folglich geringe Fügetoleranzen erreichen. Der Wechsel des Lagers wird hierdurch also weiter vereinfacht. Die Vorsprünge sind bevorzugt über den Umfang des Befestigungselements verteilt und/oder beabstandet angeordnet und/oder als Laschen ausgebildet. Besonders vorteilhaft ist es, wenn wenigstens drei solcher Vorsprünge vorgesehen sind.

Bei einer weiteren Ausführungsform ist das Befestigungselement ringförmig ausgebildet. Hierdurch kann eine besonders gute Kraftverteilung beim Befestigen und im befestigten Zustand erreicht werden. Grundsätzlich und mit besonders guter Kraftverteilung kann es vorgesehen sein, dass das Befestigungselement die Längsachse des Rotors, insbesondere den Rotor selbst, umschließt.

Weiterhin kann es vorgesehen sein, dass das Befestigungselement zusätzlich am ersten Bauteil befestigt ist. Für einen Monteur lassen sich dann das erste Bauteil und das Befestigungselement besonders einfach zusammen einsetzen. Alternativ kann das Befestigungselement lediglich zum ersten Bauteil hin, insbesondere zumindest mittelbar an diesem, anliegen. Hierdurch wird die Teileanzahl vorteilhaft verringert.

Bei einem weiteren Beispiel bildet das erste Bauteil eine radiale und/oder axiale Begrenzung für das Lagerelement. Bei diesem Beispiel sind die Begrenzungs- und Befestigungsfunktion vorteilhaft voneinander getrennt, sodass das Befestigungselement und das erste Bauteil auf besonders einfache Weise spezifisch ihrer Funktion nach entworfen und hergestellt werden können.

Es kann beispielsweise ein Betriebsmittelspeicher für das Lagerelement vorgesehen sein. Ein solcher umfasst beispielsweise im Betrieb ein Schmiermittel, insbesondere Schmieröl. Ein Betriebsmittelspeicher kann vorteilhaft als Textil- und/oder Filzkörper ausgebildet sein oder einen solchen umfassen. Insbesondere kann der Betriebsmittelspeicher eine oder mehrere Lagen eines kapillar wirkenden Materials, insbesondere Textil- und/oder Filzlagen, umfassen. Es können auch mehrere Lagen unterschiedlichen Materials vorgesehen sein. Der Rotor umfasst vorteilhaft einen konischen Abschnitt zur Förderung eines Betriebsmittels von dem Betriebsmittelspeicher zum Lagerelement.

Ein Betriebsmittelspeicher kann vorteilhaft aus Sicht des ersten Bauteils axial jenseits des Befestigungselements angeordnet sein bzw. das Befestigungselement kann axial zwischen dem ersten Bauteil und dem Betriebsmittelspeicher vorgesehen sein. Dies hat den Vorteil, dass sich der Betriebsmittelspeicher in seinem Querschnitt nicht nur unabhängig vom ersten Bauteil, sondern auch unabhängig von dem Befestigungselement auslegen lässt. Zum Erreichen eines gewünschten Volumens des Betriebsmittelspeichers kann er dadurch beispielsweise mit einem relativ großen Querschnitt ausgelegt werden, sodass in axialer Richtung nur noch eine besonders geringe Bauhöhe erforderlich ist. Im Ergebnis lässt sich die Vakuumpumpe besonders kompakt ausbilden.

Die Öffnung des Gehäuseelements kann beispielsweise auch wenigstens einen Axialabschnitt mit einem anderen Querschnitt und/oder Durchmesser aufweisen.

Das Befestigungselement kann insbesondere ebenfalls in der Öffnung, insbesondere in einem Axialabschnitt mit größerem Querschnitt angeordnet sein.

Der erste Axialabschnitt kann beispielsweise kreiszylindrisch mit konstantem Durchmesser ausgebildet sein. Alternativ oder zusätzlich kann das erste Bauteil zumindest im ersten Axialabschnitt zumindest teilweise kreiszylindrisch ausgebildet sein, insbesondere mit einem dem Durchmesser des ersten Axialabschnitts zumindest im Wesentlichen entsprechenden Durchmesser. Insbesondere kann dabei im ersten Axialabschnitt eine Spielpassung zwischen einer Innenwand der Öffnung und des ersten Bauteils vorgesehen sein.

Mit Vorteil kann es vorgesehen sein, dass zur Positionierung des Lagerelements relativ zum Gehäuseelement eine radiale Begrenzung, eine erste axiale

Begrenzung und eine zweite, der ersten entgegengesetzte, axiale Begrenzung vorgesehen sind, wobei die drei Begrenzungen von jeweils separat voneinander ausgebildeten Bauteilen gebildet sind.

Hierdurch können die Begrenzungen bzw. die Bauteile unabhängig voneinander hergestellt werden, was die Herstellung erheblich vereinfacht. Sind dagegen verschiedene Begrenzungen an demselben Bauteil angeordnet, können die Begrenzungen kaum ohne Werkzeugwechsel und Spezialwerkzeuge hergestellt werden. Die insbesondere gedreht hergestellten Bauteile lassen sich somit jeweils auf einfache Weise herstellen, sodass insbesondere auch eine von den Bauteilen gebildete Lagerfassung insgesamt einfach und kostengünstig herstellbar ist. Insbesondere wird es hierdurch ermöglicht, dass wenigstens eines der Bauteile mit nur einer Einspannung spanend, insbesondere mittels Drehen, herstellbar ist. Die unabhängige Bearbeitung der Begrenzungen ermöglicht durch die hiermit verbundene Vereinfachung außerdem eine verbesserte Toleranz in der Herstellung. Im Ergebnis kann somit eine hochpräzise Lagerung bei gleichzeitig einfacher Herstellbarkeit erreicht werden. Die Bauteile sind außerdem insbesondere auch einfach austauschbar und/oder ermöglichen eine äußerst kompakte Lagerung, was nicht nur Bauraum, sondern auch Kosten einspart.

Als Begrenzung ist generell eine in der entsprechenden Richtung begrenzende Bezugsfläche zu verstehen. Diese kann beispielsweise unmittelbar am Lagerelement, insbesondere an einem Außenring eines Wälzlagers, oder auch nur mittelbar, beispielsweise mit einem dazwischen angeordneten Dämpfungselement, insbesondere Elastomerdämpfungselement, anliegen. Zwischen Begrenzung und Lagerelement ist aber insbesondere kein Metallelement und kein ansonsten im Wesentlichen steifes Element vorgesehen. Die Begrenzung bildet somit eine definierende Anlage für das Lagerelement, ob nun unmittelbar oder gedämpft. Auch muss die Begrenzung und/oder ein Dämpfungselement nicht dauerhaft am Lagerelement anliegen. Vielmehr kann beispielsweise auch ein Abstand zwischen Begrenzung bzw. Dämpfungselement und Lagerelement vorgesehen sein, beispielsweise um eine Loslagerung und/oder einen Notanschlag zu bilden.

Zwischen Begrenzung und Außenring des Wälzlagers kann also vorzugsweise ein Freiraum oder ein Spalt vorgesehen sein. Inwieweit der Freiraum oder Spalt mit einem Dämpfungselement bzw. einem Dämpfungsmaterial gefüllt ist, hat Einfluss auf Vibrationsverhalten und Dämpfung. Insbesondere ist eine Füllung von mindestens 90% vorteilhaft. Grundsätzlich kann das Dämpfungselement beispielsweise eine homogene Struktur aufweisen. Alternativ kann das Dämpfungselement beispielsweise auch eine komplexe Struktur, beispielsweise mit Hohlräumen und/oder Vorsprüngen, aufweisen.

Beispielsweise kann an der radialen Begrenzung, an der ersten axialen Begrenzung und/oder an der zweiten axialen Begrenzung, insbesondere an allen Begrenzungen, ein Dämpfungselement vorgesehen sein.

Insofern im Rahmen dieser Anmeldung auf erste, zweite und gegebenenfalls dritte oder weitere Element, wie etwa die erste und die zweite axiale Begrenzung oder das erste, das zweite und das dritte Bauteil, Bezug genommen wird, versteht es sich, dass diese Ordinalangaben lediglich dem erleichterten Verständnis dienen und nicht notwendigerweise eine notwendige Anzahl solcher Elemente angeben. Das heißt, dass grundsätzlich beispielsweise auch ein drittes Bauteil vorgesehen sein kann, ohne dass ein zweites Bauteil vorgesehen ist. Auch kann beispielsweise ein drittes Bauteil eines Ausführungsbeispiels ein erstes Bauteil im Sinne eines Anspruchs bilden.

Wenigstens eines der, insbesondere alle, Bauteile und/oder das Gehäuseelement können vorteilhaft aus Metall, insbesondere aus Aluminium oder einer Aluminiumlegierung, und/oder Kunststoff, beispielsweise PEEK, und/oder Verbundwerkstoff, beispielsweise Faserverbundkunststoff, Glasfaserkomposit und/oder Kohlefaserkomposit, hergestellt sein.

Die erste axiale Begrenzung kann vorteilhaft das Lagerelement in einer von einem Motor und/oder einem pumpaktiven Teilbereich abgewandten Richtung und/oder in einer nach außen gerichteten Richtung begrenzen. Die zweite axiale Begrenzung kann insbesondere das Lagerelement in einer zu einem Motor und/oder einem pumpaktiven Teilbereich gerichteten Richtung und/oder einer nach innen gerichteten Richtung begrenzen. Die radiale Begrenzung kann das Lagerelement insbesondere nach radial außen hin begrenzen.

Es kann ganz allgemein und insbesondere auch als Weiterbildung einer Vakuumpumpe nach Anspruch 1 vorgesehen sein, dass eine oder die erste axiale Begrenzung von einem ersten Bauteil gebildet ist, welches von dem Gehäuseelement separat ausgebildet ist. Eine oder die zweite axiale Begrenzung kann vorteilhaft von einem zweiten Bauteil gebildet sein, welches von dem Gehäuseelement und insbesondere dem ersten Bauteil separat ausgebildet ist. Eine oder die radiale Begrenzung kann beispielsweise von einem dritten Bauteil gebildet sein, welches von dem Gehäuseelement und insbesondere vom ersten und/oder zweiten Bauteil separat ausgebildet ist. Durch die jeweilige Separierung ist die Herstellung besonders einfach, da das betreffende Bauteil und die Begrenzung unabhängig vom Gehäuseelement gefertigt werden können. Insbesondere ist es dabei nicht nötig, das allgemein relativ große Gehäuseelement bei der Herstellung der Begrenzung mit einzuspannen. Mit dem betreffenden Bauteil kann vielmehr ein relativ kleines, handliches Bauteil bearbeitet werden. Die Separierung erleichtert des Weiteren einen Austausch der die Begrenzung bildenden Bauteile. Somit können Schäden an den Begrenzungen leichter behoben werden.

Gemäß einer Ausführungsform ist vorgesehen, dass die Bauteile eine aus der Öffnung herausnehmbare Lagerfassung bilden. Hierdurch wird nicht nur allgemein die Austauschbarkeit des Lagerelements vereinfacht, sondern es wird auch eine verbesserte Einbauqualität, also präzise Anordnung des Lagerelements und der nötigen Dichtungen, bei einem Wechsel des Lagerelements durch einen Benutzer erreicht. Denn durch die Lagerfassung wird es dem Benutzer ermöglicht, dass er das Lagerelement selbst und gegebenenfalls vorhandene Dämpfungselemente nicht an den Begrenzungen positionieren muss, wofür er häufig nicht die nötige Erfahrung oder die nötigen Werkzeuge besitzt. Der Pumpenhersteller kann dagegen die Lagerfassung als Austauschmodul anbieten, welches der Benutzer mit einfachen Mitteln und ohne besondere Erfahrung einsetzen kann. Dies ist im Ergebnis auch besonders kostengünstig, da nicht für einen fachmännischen Einbau eines neuen Lagerelements ein Servicemitarbeiter des Pumpenherstellers vor Ort sein muss. Und selbst wenn der Einsatz einer Servicemitarbeiters notwendig bleibt, ist auch für ihn das Einsetzen der Lagerfassung als Modul deutlich vereinfacht. Die Lagerfassung kann also allgemein, insbesondere als Ganzes und/oder ohne Trennung des Lagerelements von den Begrenzungen und/oder nach außen hin, herausnehmbar ausgebildet sein. Insbesondere kann die, vorzugsweise voreingestellte, Lagerfassung ohne Demontage der Pumpe, beispielsweise durch den Servicemitarbeiter, herausnehmbar sein.

Bei einer weiteren, besonders einfachen Ausführungsform bilden die Bauteile eine Lagerfassung, wobei die Lagerfassung mittels eines Befestigungselements axial in der Öffnung, insbesondere gegen eine Schulter des Gehäuseelements, festgelegt ist. Das Befestigungselement kann insbesondere platten- und/oder Scheibenförmig ausgebildet sein und auch ansonsten die oben beschriebenen Merkmale und Vorteile aufweisen.

Gemäß einer Weiterbildung ist vorgesehen, dass wenigstens zwei der Bauteile mittels einer Presspassung verbunden sind. Hierdurch können Bauraum eingespart und die Herstellungskosten weiter reduziert werden. Die betreffenden Bauteile können dabei im Wesentlichen wie ein einteiliges Bauteil mit den entsprechenden Vorteilen gehandhabt werden, wobei jedoch die Begrenzungen vor dem Fügen unabhängig voneinander mit den oben beschriebenen Vorteilen bearbeitetet werden konnten. Insbesondere ist es vorteilhaft, wenn das zweite und das dritte Bauteil durch eine Presspassung verbunden sind, insbesondere das zweite Bauteil in das dritte Bauteil eingepresst ist.

Wenigstens zwei der Bauteile, insbesondere das erste und das dritte Bauteil können vorteilhaft mittels eines separaten Verbindungselements, z.B. einer Schraube, verbunden sein.

Bei noch einer Weiterbildung umfasst wenigstens eine der Begrenzungen, also insbesondere die radiale, die erste axiale und/oder die zweite axiale Begrenzung, ein Dämpfungselement und einen Notanschlag für das Lagerelement, welche an demselben Bauteil angeordnet sind. Hierdurch wird eine Funktionsintegration an dem betreffenden Bauteil erreicht, wobei aber die von der Erfindung bereitgestellte einfache Herstellbarkeit bestehen bleibt, da eine Anlagefläche für das Dämpfungselement und der Notanschlag aus der gleichen Bearbeitungsrichtung bearbeitet werden können und somit die Herstellung einfach und präzise bleibt. Insbesondere ist keine Umspannung und kein Werkzeugwechsel zwischen der Herstellung der Anlagefläche und des Notanschlags notwendig.

Es kann des Weiteren vorgesehen sein, dass ein Betriebsmittelspeicher für das Lagerelement vorgesehen ist und insbesondere der Betriebsmittelspeicher axial außerhalb, insbesondere auf einer einem Motor und/oder einem pumpaktiven Teilbereich abgewandten Seite, der Bauteile und/oder einer durch diese gebildeten Lagerfassung angeordnet ist. Insbesondere ist wenigstens eine Textil- und/oder Filzlage des Betriebsmittelspeichers axial außerhalb angeordnet. Hierdurch kann der Betriebsmittelspeicher unabhängig von den Bauteilen bzw. der Lagerfassung dimensioniert werden, insbesondere mit größerem Querschnitt ausgelegt werden, sodass die Lagerung insgesamt kompakt ausgebildet werden kann. Insbesondere kann der Betriebsmittelspeicher auch axial außerhalb einer Einheit von Bauteilen und Befestigungselement angeordnet sein.

Wenigstens eines der, insbesondere die, Bauteile, insbesondere auch ein Befestigungselement für die Bauteile, können beispielsweise jeweils wenigstens eine Ausnehmung aufweisen, worin ein, vorzugsweise ein kapillar wirkendes Material umfassendes, Betriebsmitteltransportelement angeordnet ist, welches fluidisch mit einem Betriebsmittelspeicher verbunden ist. Hierdurch lässt sich ein Transport von Betriebsmittel, insbesondere zum Betriebsmittelspeicher, auf einfache Weise realisieren. Das oder die Betriebsmitteltransportelemente können beispielsweise ein Betriebsmittelverteilungs- und/oder ein Betriebsmittelrücktransportelement bilden oder umfassen. Das kapillar wirkende Material kann beispielsweise Textil, Filz und/oder einen schwammartigen und/oder porösen Kunststoff, umfassen oder hieraus hergestellt sein. Beispielsweise kann wenigstens ein Betriebsmitteltransportelement mittels einer elastischen Halteeinrichtung, insbesondere einem O-Ring, in Position gehalten sein.

Das zweite Bauteil kann beispielsweise eine stirnseitige, insbesondere umlaufende Ausnehmung mit einem, insbesondere ringförmigen, Betriebsmitteltransportelement, insbesondere Betriebsmittelverteilungselement umfassen.

Bei einer weiteren Ausführungsform kann ein radialer Betriebsmitteldurchlass, insbesondere Öldurchlass, an einer Stirnseite eines der Bauteile, insbesondere dem zweiten und/oder dritten Bauteil, insbesondere an einer dem anderen Bauteil zugewandten Stirnseite, ausgebildet sein. Ein solcher ist an der Stirnseite, beispielsweise in Form einer einfachen Ausnehmung und/oder eines Absatzes, besonders einfach herstellbar. Dies gilt insbesondere im Gegensatz zu einer bekannten Konstruktion, bei der ein Ölschlitz von innen in eine im Wesentlichen hohlzylindrische Innenwand eines Bauteils beispielsweise mittels Sägen eingebracht wird. Es gilt aber auch im Gegensatz zu einer bekannten Konstruktion, bei der ein Öldurchlass als radiale Durchgangsbohrung ausgebildet wird, bei der folglich zumindest ein zusätzlicher Bohrungsschritt bei der Herstellung des betreffenden Bauteils notwendig ist. Der stirnseitige Betriebsmitteldurchlass kann dagegen beispielsweise mit demselben formgebenden Werkzeug, insbesondere demselben Drehmeißel gefertigt werden, wie andere Abschnitte der Bauteilform.

Bei noch einer Weiterbildung ist zwischen den Bauteilen wenigstens eine Einstelleinlage zur Einstellung des Abstands zwischen den axialen Begrenzungen angeordnet. Hierdurch kann die Lagerung präzise und auf einfache Weise eingestellt werden. Außerdem sind somit keine Gewinde im Lagerfassungsbereich mehr nötig, die bei der Montage bewegt werden müssen. Damit wird die Erzeugung von Spänen bei der Montage vermieden, die zu einem erhöhten Verschleiß oder vorzeitigem Ausfall des Lagers führen könnten.

Insbesondere kann das dritte Bauteil axial zwischen dem ersten und dem zweiten Bauteil angeordnet sein. Das zweite Bauteil kann insbesondere auf einer einem Motor und/oder einem pumpaktiven Teilbereich zugewandten Seite des dritten Bauteils angeordnet sein. Das erste Bauteil kann insbesondere auf einer einem Motor und/oder einem pumpaktiven Teilbereich abgewandten Seite des dritten Bauteils angeordnet sein. Ein Befestigungselement für die Bauteile bzw. für eine Lagerfassung kann insbesondere auf einer einem Motor und/oder einem pumpaktiven Teilbereich abgewandten Seite der Bauteile bzw. der Lagerfassung angeordnet sein.

Gemäß einer Weiterbildung ist vorgesehen, dass eines der Bauteile, insbesondere das dritte Bauteil, eine Zentrierung in Bezug auf das Gehäuseelement aufweist. Insbesondere weist eines der Bauteile, insbesondere dasselbe Bauteil, eine Zentrierung für das Lagerelement auf.

Gemäß einer weiteren vorteilhaften Ausführungsform umfasst das dritte Bauteil einen, insbesondere abgesetzten, als Radialzentrierung ausgebildeten Zentrierumfang. Der Zentrierumfang ist insbesondere vollständig umlaufend ausgebildet. Besonders vorteilhaft ist eine axiale Länge des Zentrierumfangs von weniger als oder höchstens 5 mm, insbesondere höchstens oder etwa 3 mm. Besonders vorteilhaft ist alternativ oder zusätzlich eine axiale Länge des Zentrierumfangs von mindestens 0,5 mm, insbesondere mindestens oder etwa 1 mm. Hierdurch lässt sich das dritte Bauteil und/oder die Lagerfassung besonders einfach und mit geringem Risiko eines Verkantens in die Öffnung der Gehäuseelements einführen, welche insbesondere einen korrespondierenden Zentrierinnenumfang aufweist, der insbesondere eine größere axiale Länge als der Zentrierumfang des dritten Bauteils aufweisen kann.

Insbesondere können die Bauteile derart ausgestaltet sein, dass sie keine Hinterschneidungen aufweisen, wie es etwa bei bekannten Konstruktionen im Bereich eines radialen Dämpfungselements der Fall war. Hierdurch wird einerseits die Herstellung des Bauteils und andererseits die Montage eines Dämpfungselements weiter vereinfacht.

Zwischen dem Gehäuseelement und der Lagerfassung bzw. wenigstens einem von erstem, zweiten und dritten Bauteil und/oder zwischen wenigstens zweien von erstem, zweiten und dritten Bauteil kann vorteilhafterweise ein Dämpfungs-, Dicht- und/oder Zentrierungselement, insbesondere ein O-Ring, vorgesehen sein. Durch Dämpfungselemente, z.B. O-Ringe, lassen sich eine Schwingungsentkopplung der betreffenden Bauteile und so ein insgesamt vorteilhaftes Schwingungsverhalten erreichen. Auch kann beispielsweise zwischen einem Befestigungselement und einem ersten Bauteil, insbesondere einer Lagerfassung, ein Dämpfungs-, Dicht- und/oder Zentrierungselement vorgesehen sein.

Axial zwischen dem Gehäuseelement und der Lagerfassung bzw. wenigstens einem von erstem, zweiten und dritten Bauteil und/oder zwischen wenigstens zweien von erstem, zweiten und dritten Bauteil kann vorteilhafterweise eine Einstelleinlage, insbesondere Scheibe, vorgesehen sein. Hierdurch kann die Lagerfassung auch bei relativ großen Herstellungstoleranten auf einfache Weise in ihren Dimensionen eingestellt werden, sodass an der Pumpe, in welche die Lagerfassung eingebaut wird, zumindest im Wesentlichen keine Änderungen, insbesondere keine Neueinstellung eines Magnetlagers, notwendig sind und/oder das neue Lagerelement auf für den Monteur einfache Weise exakt so positioniert werden kann wie das zuvor vorhandene Lagerelement.

Ein Befestigungselement, insbesondere für die Lagerfassung, kann vorteilhaft auch einstückig mit einem Bauteil ausgeführt sein, welches eine Begrenzung für das Lagerelement aufweist.

Grundsätzlich ist es, insbesondere zur Vereinfachung der Montage, vorteilhaft, wenn wenigstens zwei von erstem, zweitem und drittem Bauteil zumindest für die Zeit der Montage fest verbunden sind. Dies kann beispielsweise mittels Bolzen, Schrauben, Hohlnieten, Blindnieten, Schnappverbindungen und/oder Pressverbindungen oder ähnlichem erfolgen.

Die hier beschriebenen Erfindungsaspekte eignen sich insbesondere zur Verbesserung von Turbomolekularpumpe, insbesondere solchen die eine Hybridlagerung aufweisen, und auch allgemein von Vakuumpumpen mit schnell drehenden Rotoren.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: eine erfindungsgemäße Turbomolekularpumpe in einer Schnittdarstellung,
- Fig. 7: eine erfindungsgemäße Lagerfassung der Pumpe gemäß Fig. 6 in einer perspektivischen Schnittansicht,
- Fig. 8: die Lagerfassung der Fig. 7 ohne Schnitt,
- Fig. 9: die Lagerfassung in einer Explosionsdarstellung,
- Fig. 10: die Lagerfassung mit einer ersten Ausführungsform eines Befestigungselements,
- Fig. 11: die Lagerfassung mit einer zweiten Ausführungsform eines Befestigungselements,
- Fig. 12: einen auf die Lagerfassung gerichteten Ausschnitt der Fig. 6 vergrößert,
- Fig. 13: eine Einbausituation einer Lagerfassung in einer erfindungsgemäßen Pumpe,
- Fig. 14: eine weitere Schnittansicht einer erfindungsgemäßen Pumpe mit Lagerfassung,
- Fig. 15: eine weitere Ausführungsform einer Turbomolekularpumpe in Schnittdarstellung,
- Fig. 16: eine weitere Ausführungsform einer Turbomolekularpumpe in Schnittdarstellung,
- Fig. 17: eine weitere Ausführungsform eines Befestigungselements,
- Fig. 18: eine weitere Ausführungsform einer Lagerfassung.

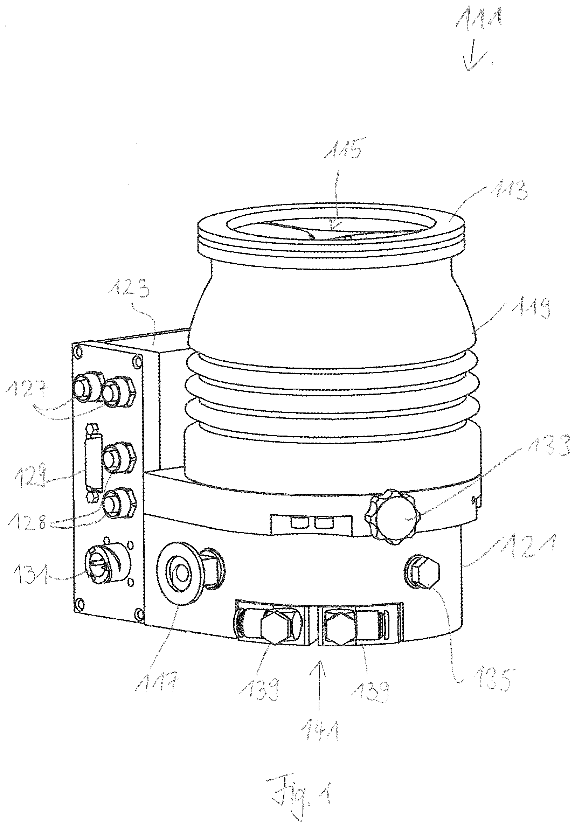

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör und Anschlüsse 128, die beispielsweise zum Aufspielen neuer Software oder Auslesen des Pumpenchips ausgebildet sein können, vorgesehen. Außerdem sind eine Datenschnittstelle 129, z.B. gemäß dem RS485-Standard, und ein Stromversorgungsanschluss 131 am Elektronikgehäuse 123 angeordnet.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei denen die Unterseite 141 nicht nach unten, sondern zur Seite gewandt oder nach oben gerichtet angeordnet werden kann. Grundsätzlich sind beliebige Orientierungen möglich.

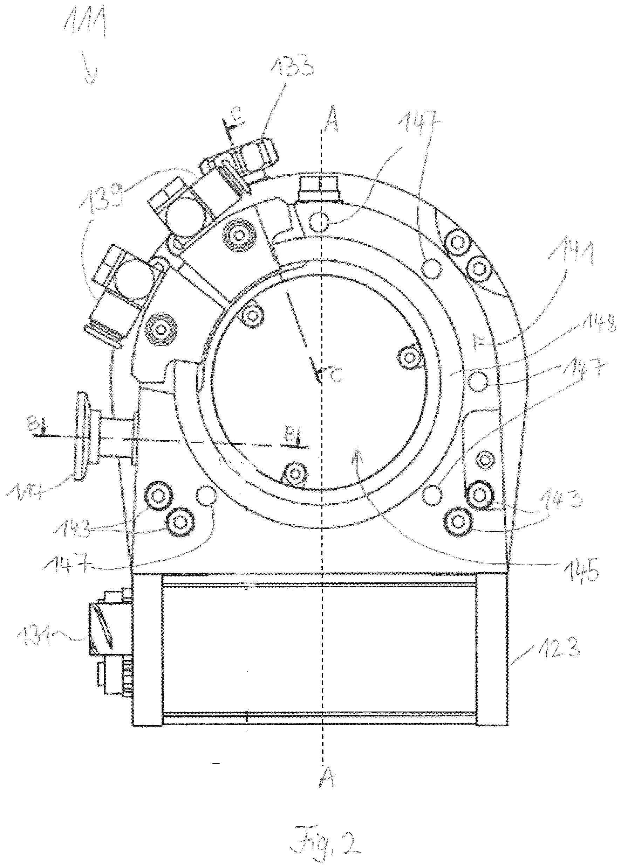

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

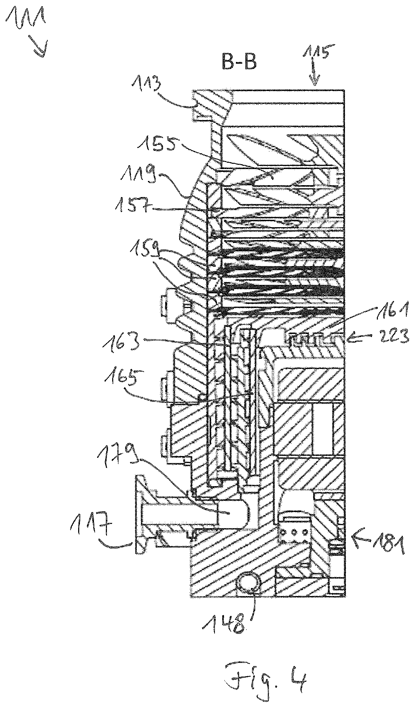

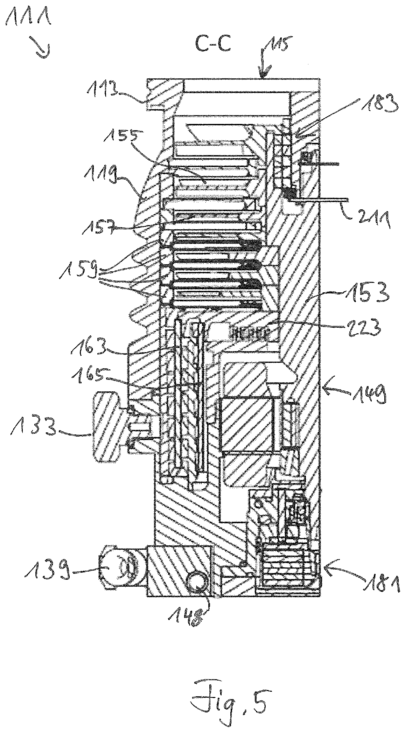

In den Figuren 2 bis 5 ist eine Kühlmittelleitung 148 dargestellt, in welcher das über die Kühlmittelanschlüsse 139 ein- und ausgeleitete Kühlmittel zirkulieren kann.

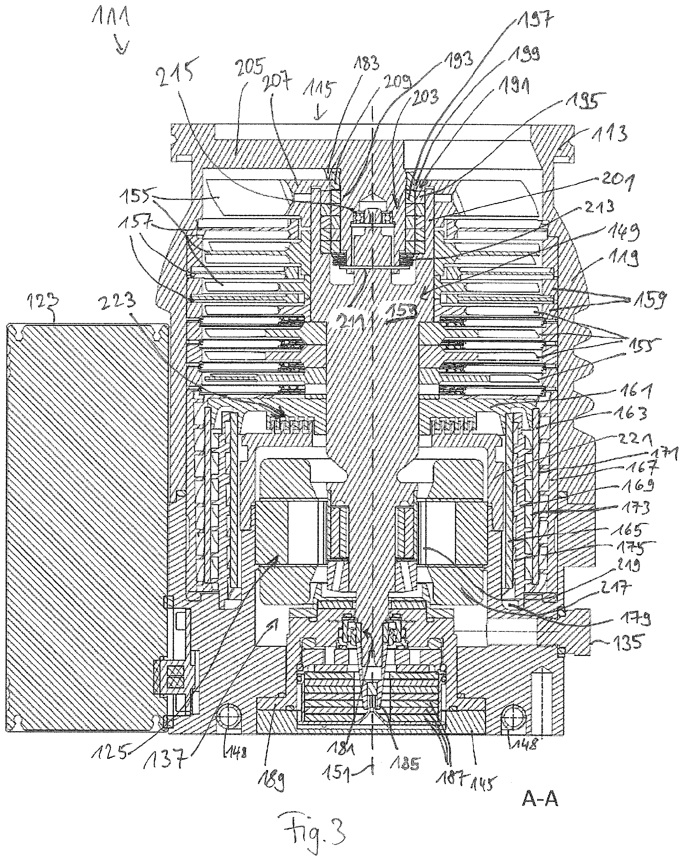

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind. Grundsätzlich sind auch andere Ausführungsformen, beispielsweise mit anderen Zahlen von Holweck-Pumpstufen, Holweck-Rotorhülsen und Holweck-Statorhülsen möglich. Insbesondere können auch eine oder mehr als zwei Rotorhülsen und/oder Statorhülsen vorgesehen sein.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 167, 169 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein. Grundsätzlich können auch keine oder mehrere Tellerfedern oder auch ein oder mehrere andere Ausgleichselemente vorgesehen sein.

Innerhalb des Magnetlagers ist ein Not- bzw. Fanglager 215 vorgesehen, welches im normalen Betrieb der Vakuumpumpe 111 ohne Berührung ruht und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist bevorzugt als, insbesondere ungeschmiertes oder trockengeschmiertes, Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Der Motorraum 137 bildet in diesem Ausführungsbeispiel auch einen Lagerraum für das Lager 181. Somit bildet das Sperrgas auch eine Barriere für das Lager 181 gegen korrosives Prozessgas. Grundsätzlich kann, insbesondere auch in separaten Räumen, Sperrgas für ein Lager und/oder für einen Motor vorgesehen sein. Insbesondere lassen sich mittels Sperrgas ein Motor, ein Lager, ein Betriebsmittelspeicher, ein Betriebsmittel und/oder eine Sensorik oder auch beliebige andere Komponenten schützen.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

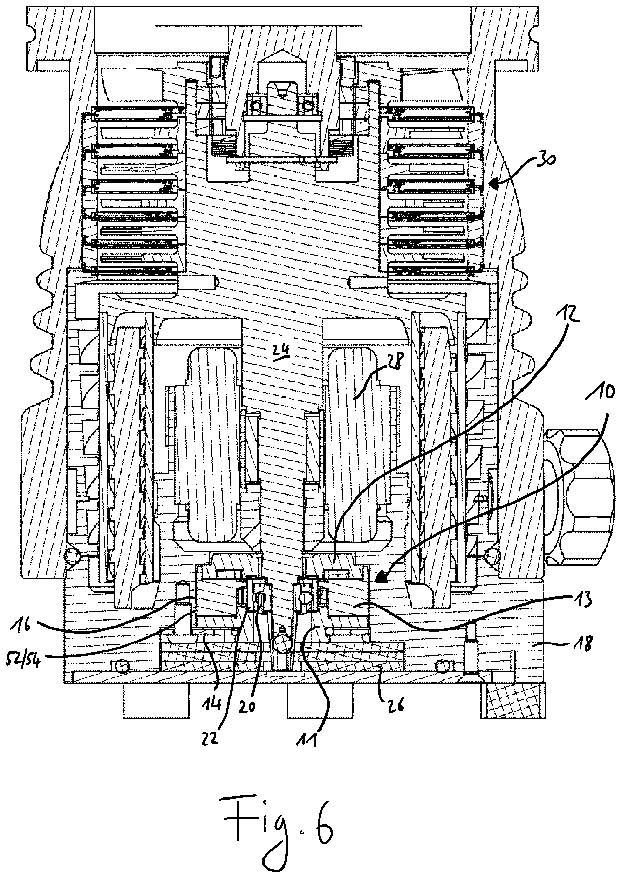

In Fig. 6 ist eine erfindungsgemäße, als Turbomolekularpumpe ausgebildete, Vakuumpumpe gezeigt, die insbesondere hinsichtlich ihrer pumpaktiven Teilbereiche ähnlich zu der in den Fig. 1 bis 5 gezeigten Vakuumpumpe des Standes der Technik ausgebildet ist und auch allgemein entsprechend beliebiger Merkmale der vorstehend beschriebenen Vakuumpumpe weitergebildet werden kann. Die in Fig. 6 gezeigte Vakuumpumpe zeichnet sich jedoch insbesondere durch eine Lagerfassung 10 aus, welche drei separate Bauteile umfasst, nämlich ein erstes Bauteil 11, ein zweites Bauteil 12 und ein drittes Bauteil 13.

Die Lagerfassung 10 ist mittels eines platten- und/oder scheibenförmigen Befestigungselements 14 in einer Öffnung 16 eines Gehäuseelements 18 befestigt. Das Gehäuseelement 18 bildet hier z.B. ein Unterteil der Vakuumpumpe. Grundsätzlich muss aber ein Gehäuseelement weder als Unterteil noch als Element eines Außengehäuses ausgebildet sein. Vielmehr bezieht sich der Begriff "Gehäuse" allgemein auf ein Element, welches eine feste Struktur in oder an der Vakuumpumpe bildet, insbesondere einen festen Bezug für ein Lager bzw. eine Lagerfassung bildet. Diese Struktur bzw. dieser Bezug könnte auch durch ein vom Außengehäuse separates Element gebildet sein, welches insbesondere an dem Außengehäuse befestigt sein kann.

Die Lagerfassung 10 umfasst außerdem ein Lagerelement 20, welches vorliegend als Wälzlager, insbesondere Kugellager, ausgebildet ist. Die Lagerfassung 10 bzw. die Bauteile 11 bis 13 weisen dabei noch näher zu beschreibende Begrenzungen für einen Außenring 22 des Lagerelements 20 auf. Ein Innenring 23 des Lagerelements 20 ist an einem Rotor 24 befestigt.

In der Öffnung 16 des Gehäuseelements 18 ist ein Betriebsmittelspeicher 26 in Form mehrerer Filzlagen vorgesehen. Der Betriebsmittelspeicher 26 ist in axialer Richtung auf einer dem Motor 28 und dem pumpaktiven Teilbereich 30 abgewandten Seite der Bauteile 11 bis 13 und des Befestigungselements 14 angeordnet. Außerdem ist der Betriebsmittelspeicher 26 in einem Axialabschnitt der Öffnung 16 angeordnet, welcher einen deutlich größeren Durchmesser aufweist als ein erster Axialabschnitt, in dem die Lagerfassung 10 angeordnet ist. Entsprechend weist der Betriebsmittelspeicher 26 einen größeren Durchmesser auf als die Lagerfassung 10. Es zeigt sich außerdem, dass der Betriebsmittelspeicher 26 nur eine relativ geringe axiale Höhe aufweist. Durch den relativ großen Querschnitt bzw. Durchmesser wird jedoch ein vorteilhaftes Volumen des Betriebsmittelspeichers 26 erreicht, wobei jedoch die axiale Bauhöhe von Lagerfassung 10 und Betriebsmittelspeicher 26 insgesamt relativ klein und kompakt ist.

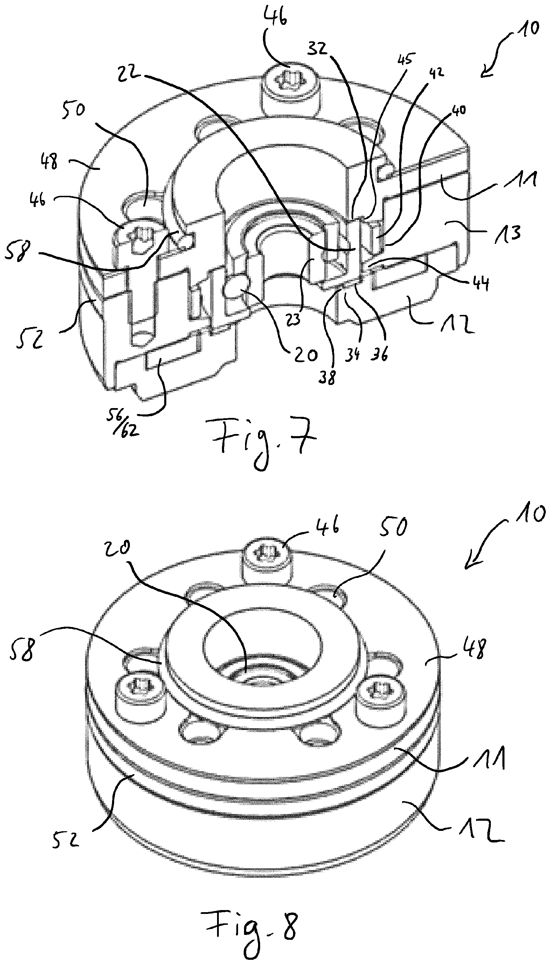

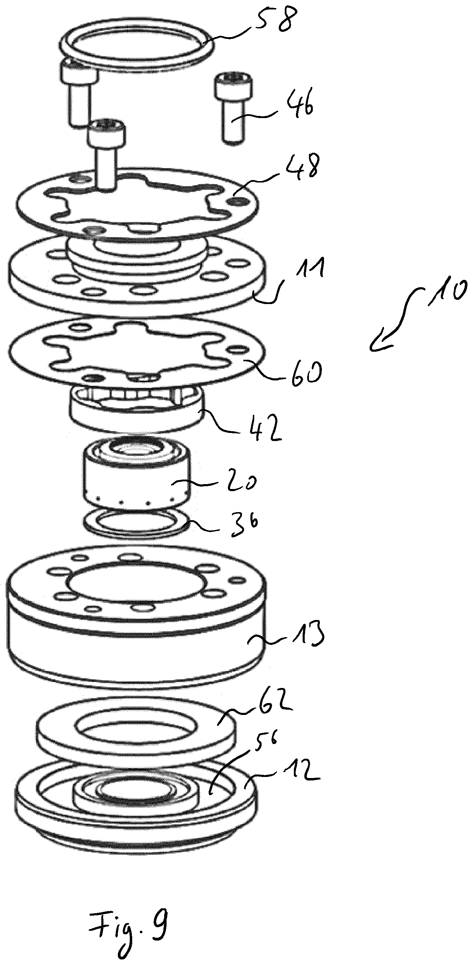

Die Lagerfassung 10 der Vakuumpumpe der Fig. 6 wird nachfolgend anhand der Fig. 7 und 8 näher beschrieben. Es ist zu beachten, dass die Fig. 7 und 8 wie auch die Fig. 9 bis 11 die Lagerfassung 10 in einer Ausrichtung zeigen, welche gegenüber der in Fig. 6 gezeigten Einbaulage um 180° gedreht ist, also "auf dem Kopf steht".

Die Fig. 7 und 8 zeigen die Lagerfassung 10 mit dem ersten Bauteil 11, dem zweiten Bauteil 12 sowie dem axial dazwischen angeordneten, dritten Bauteil 13. Nur in Fig. 7 sind aufgrund der dort gewählten Schnittdarstellung das zweite Bauteil 12 sowie weitere Elemente sichtbar.

Die Bauteile 11 bis 13 begrenzen das Lagerelement 20 radial sowie in zwei axialen Richtungen. Das erste Bauteil umfasst eine axiale Begrenzung 32. Diese ist hier als einfacher Anschlag bzw. Anlage für den Außenring 22 des Lagerelements 20 ausgebildet. Das zweite Bauteil 12 umfasst eine der Begrenzung 32 entgegengesetzte, axiale Begrenzung 34, welche ein Dämpfungselement 36 aufweist. Die axiale Begrenzung 34 umfasst außerdem einen ebenfalls am zweiten Bauteil 12 ausgebildeten Notanschlag 38. Der Notanschlag 38 ist im Normalbetrieb von dem Lagerelement 20 beabstandet, begrenzt jedoch unerwünscht extreme Axialverschiebungen des Lagerelements 20. Das dritte Bauteil 13 umfasst eine radiale Begrenzung 40 für das Lagerelement 20, welche in dieser Ausführungsform ebenfalls ein Dämpfungselement 42 sowie einen Notanschlag 44 umfasst. Alternativ oder zusätzlich kann beispielsweise auch an Position 45 bzw. am ersten Bauteil 11 ein radialer Notanschlag vorgesehen sein. Grundsätzlich können also Notanschläge auch an anderen Bauteilen vorgesehen sein als Begrenzungen für den Normalbetrieb, insbesondere an anderen Bauteilen als ein in entsprechender Richtung begrenzendes Dämpfungselement.

In Fig. 7 ist ein Abstand zwischen dem Dämpfungselement 42 und dem Außenring 22 des Lagerelements 20 sichtbar. Dieser ergibt sich aufgrund einer bevorzugt nicht kreiszylindrisch ausgebildeten Innenwandung des Dämpfungselements 42, wie sie in Fig. 9 sichtbar ist und noch näher beschrieben wird. Das Dämpfungselement 42 umfasst aber in Fig. 7 nicht sichtbare Abschnitte des Innenumfangs, welche unmittelbar am Außenring 22 des Lagerelements 20 anliegen und dieses gegen das dritte Bauteil 13 abstützen und dämpfen. Vorzugsweise ist in axialer Richtung an wenigstens einer Seite des Dämpfungselements 42 ein Freiraum oder Spalt vorgesehen. Hierdurch wird eine homogene Einfederung des Dämpfungselements 42 ermöglicht.

Zum Beispiel anhand von Fig. 7 ist gut ersichtlich, dass die Begrenzungen 32, 34 und 40 jeweils unabhängig voneinander und einfach herstellbar sind. So kann beispielsweise die Begrenzung 32 auf einfache Weise axial bearbeitet werden, die Begrenzung 40 völlig unabhängig hiervon radial bearbeitet werden und die Begrenzung 34 wiederum unabhängig axial bearbeitet werden. Insbesondere können alle drei Begrenzungen mit einfachen Standardwerkzeugen bearbeitet werden.

Außerdem zeigt sich, dass das zweite Bauteil 12 auf seiner dem Motor zugewandten Seite im Wesentlichen frei ist, sodass diese Seite im Wesentlichen ohne Toleranz gefertigt werden kann. Dies führt dazu, dass das Bauteil 12 auf besonders einfache Weise fortlaufend aus einem Stangenmaterial hergestellt werden kann. Dabei können im Rahmen derselben Einspannung alle Funktionsflächen ausgebildet werden und anschließend das Bauteil an der toleranzfreien Seite einfach abgestochen oder abgesägt werden. Dieses Beispiel illustriert, wie die Erfindung die Herstellung der Lagerfassung flexibilisiert, vereinfacht und bessere Toleranzen an den Funktionsflächen ermöglicht.

Die Lagerfassung 10 umfasst außerdem hier beispielsweise als Schrauben 46 ausgebildete Befestigungsmittel, mittels derer das erste Bauteil 11 an dem dritten Bauteil 13 befestigt ist. Das zweite Bauteil 12 ist in einer Ausnehmung des dritten Bauteils 13 axial eingepresst. Die Bauteile 11, 12 und 13 können auch auf andere Weise aneinander befestigt sein. Beispielsweise ist eine Ausführungsform denkbar, bei der wenigstens ein Befestigungsmittel das erste Bauteil 11 und das zweite Bauteil 12 so miteinander verbindet, dass das dritte Bauteil 13 zwischen erstem und zweitem Bauteil festgelegt, insbesondere eingeklemmt, ist. Auch sind andere Befestigungsmittel denkbar, wie etwa ein solches, wie es in Fig, 17 gezeigt ist oder ein Stopfen aus Kunststoff oder ähnliches.

Grundsätzlich kann eine Verbindung der Bauteile 11, 12 und/oder 13 lösbar ausgebildet sein und beispielsweise im montierten Zustand der Bauteile in der Pumpe kann die Verbindung gelöst werden, beispielsweise indem die Schrauben 46 entfernt werden. Die Bauteile 11, 12 und 13 können dann beispielsweise lediglich durch das Befestigungselement 14 festgelegt sein. Folglich ist es zur Realisierung der Erfindung in ihrem allgemeinsten Gedanken nicht einmal nötig, dass die Bauteile 11, 12 und 13 überhaupt unmittelbar aneinander befestigt und/oder zu einer festen Lagefassung 10 verbunden sind. Insbesondere ergeben sich die Vorteile in der Herstellung bereits ohne eine solche Befestigung bzw. Verbindung. Die Verbindung der Bauteile 11, 12 und 13 zu einer festen Lagerfassung 10 ergibt aber zusätzlich insbesondere die bereits erwähnten, besonderen Vorteile in der Handhabung, insbesondere beim Lagerwechsel.

Die Lagerfassung 10 umfasst ferner eine optionale Scheibe 48, welche die von den Schrauben 46 aufgebrachten Kräfte vorteilhaft über die Stirnseite des ersten Bauteils 11 verteilt.

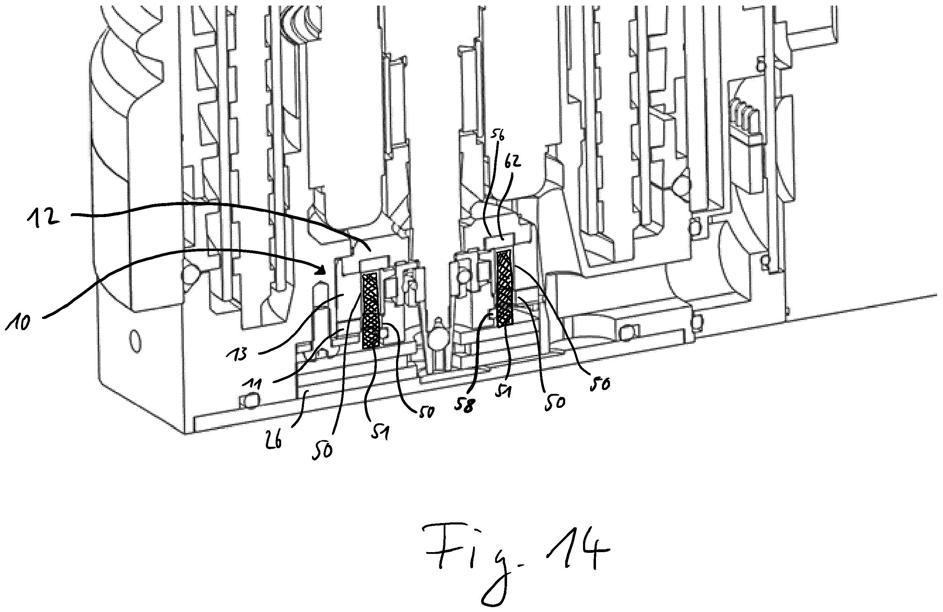

Sowohl das erste Bauteil 11, als auch das dritte Bauteil 13 und die Scheibe 48 umfassen fluchtende Ausnehmungen 50 für insbesondere zylinderförmige Betriebsmittelrückführungselemente 51, welche hier nicht gezeigt aber unten anhand von Fig. 14 näher beschrieben sind.

Das erste Bauteil umfasst an einer Außenseite einen Zentrierumfang 52, der zusammen mit einem Zentrierinnenumfang 54 der Öffnung 16, wie er zum Beispiel in Fig. 6 sichtbar ist, eine Radialzentrierung bildet. Der Zentrierumfang 52 ist, wie es beispielsweise in den Fig. 7 und 8 sichtbar ist, relativ kurz in Bezug auf die axiale Länge der Lagerfassung 10 ausgebildet, hierdurch lässt sich die Lagerfassung 10 besonders gut in die Öffnung 16 einführen. Insbesondere wird somit ein Verkanten beim Einführen vermieden. Auch lässt sich ein axial kurzer Zentrierumfang besonders einfach fertigen.

Das zweite Bauteil 12 umfasst eine umlaufend in einer Stirnseite ausgebildete Ausnehmung 56 für ein Betriebsmittelverteilungselement 62. Dieses steht in Kommunikation mit den in den Ausnehmungen 50 angeordneten Betriebsmittelrückführungselementen 51. Zusammen bewirken die in den Ausnehmungen 56 und 50 angeordneten Betriebsmittelverteilungs- bzw. -rückführungselemente 62 bzw. 51 eine über den Umfang gleichmäßige Verteilung des Betriebsmittels sowie einen geordneten Rücktransport des Betriebsmittels vom Lagerelement 20 zum Betriebsmittelspeicher 26.

Die Lagerfassung 10 umfasst außerdem eine hier als O-Ring 58 ausgebildete Halteeinrichtung für die Betriebsmittelrückführungsselemente, welche in den Ausnehmungen 50 angeordnet sind, und insbesondere in axialer Richtung aus diesen herausragen und in Kontakt mit dem Betriebsmittelspeicher 26 stehen. In Fig. 7 ist der O-Ring 58 ohne die Betriebsmittelrückführungselemente 51 gezeigt. Zum Halten der Betriebsmittelrückführungselemente 51 bewirkt der O-Ring 58 eine elastische Kraft in radialer Richtung nach außen auf die Betriebsmittelrückführungselemente 51. Dies ist in Fig. 14 sichtbar.

In Fig. 9 ist die Lagerfassung 10 in einer Explosionsdarstellung gezeigt. In axialer Reihenfolge sind ein O-Ring 58, Schrauben 46, eine Scheibe 48, ein erstes Bauteil 11, eine Einstelleinlage 60, ein Dämpfungselement 42, ein Lagerelement 20, ein axiales Dämpfungselement 36, ein drittes Bauteil 13, ein Betriebsmittelverteilungselement 62 sowie ein zweites Bauteil 12 sichtbar.

Die Einstelleinlage 60 ist relativ dünn ausgebildet und daher in den Zusammenbaudarstellungen der Fig. 6, 7 und 8 kaum oder nicht sichtbar. Sie ist zwischen dem ersten Bauteil und dem dritten Bauteil angeordnet bzw. kann optional dort angeordnet sein. Durch eine oder mehrere solche Einstelleinlagen 60 kann der Abstand der Begrenzungen 32 und 34 eingestellt werden. Entsprechend können alternativ oder zusätzlich eine oder mehrere Einstelleinlagen auch zwischen dem zweiten Bauteil 12 und dem dritten Bauteil 13 vorgesehen sein. Auch hierdurch lässt sich der Absatz der Begrenzungen 32 und 34 einstellen.

Das ringförmige radiale Dämpfungselement 42 dient der radialen Dämpfung des Lagerelements 20. In Fig. 9 ist ersichtlich, dass hier rein beispielhaft und grundsätzlich optional eine Innenwandung des Dämpfungselements 42 nicht kreiszylindrisch ausgebildet ist, sondern mehrere Vorsprünge aufweist, welche zur kreiszylindrischen Form des Lagerelements 20 korrespondieren und im Betrieb bzw. im Zusammenbau an diesem anliegen.

Das Betriebsmittelverteilungselement 62 ist ringförmig ausgebildet und wird in eine korrespondierende Ausnehmung 56 des zweiten Bauteils 12 eingelegt. Das Betriebsmittelverteilungselement 62 kann beispielsweise aus einem kapillar wirkenden Material, wie beispielsweise Textil und/oder Filz, hergestellt sein. Es kann beispielsweise durch eine Übermaß- und/oder Presspassung in der Ausnehmung 56 befestigt sein oder auch nur eingelegt oder beispielsweise eingeklebt sein. Das Betriebsmittelverteilelement 62 sorgt für eine über den Umfang gleichmäßige Verteilung des Betriebsmittels sowie in Verbindung mit zu einem Betriebsmittelspeicher zurückführenden Elementen, insbesondere den in den Ausnehmungen 50 angeordneten Betriebsmittelrückführungselementen 51, für einen geordneten Rücktransport.

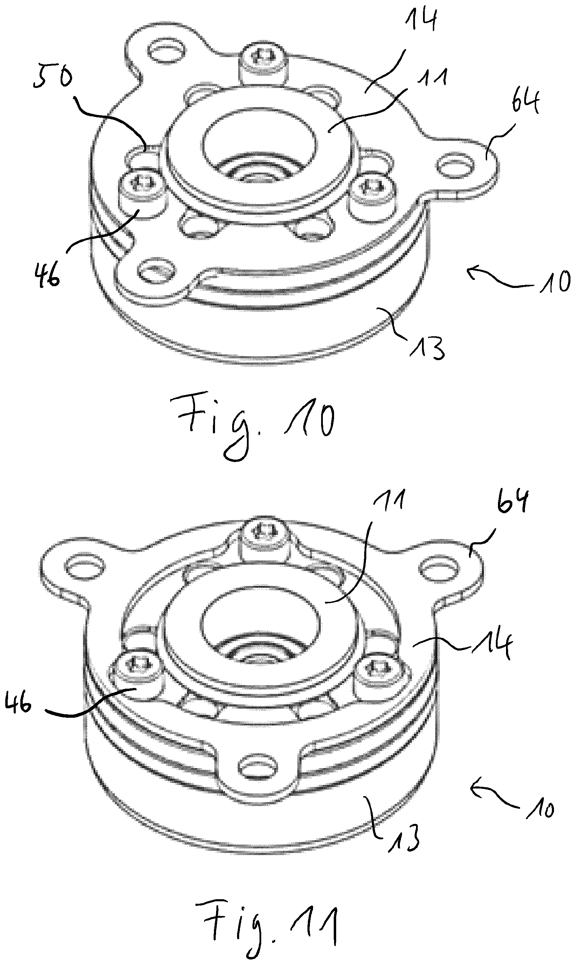

In den Fig. 10 und 11 sind verschiedene Ausführungsformen für ein Befestigungselement 14 zur Befestigung des ersten Bauteils 11 bzw. der Lagerfassung 10 in einer Öffnung 16 des Gehäuseelements gezeigt. Die Befestigungselemente 14 sind im Wesentlichen ringförmig ausgebildet und umgeben eine Längsachse des nicht dargestellten Rotors. Die Befestigungselemente 14 sind außerdem generell plattenförmig und vorteilhaft als Blech- und/oder Stanzteile ausgebildet.

Das jeweilige Befestigungselement 14 erstreckt sich radial sowohl innerhalb als auch außerhalb eines Querschnitts des ersten Bauteils, der Lagerfassung 10 sowie eines Axialbereichs der Öffnung 16, wie es beispielsweise in Fig. 6 sichtbar ist. Dabei erstreckt sich das Befestigungselement 14 insbesondere mit einer Mehrzahl von Laschen 64 außerhalb dieser Querschnitte und bildet insbesondere innerhalb dieser Querschnitte eine Ringplatte.

Die Befestigungselemente 14 der Fig. 10 und 11 unterscheiden sich dabei insbesondere durch die Ausführung der Ringplatte. Diese erstreckt sich bei der Ausführungsform der Fig. 10 in radialer Richtung im Wesentlichen bis hin zu dem ersten Bauteil 11 bzw. einem Umfang hiervon. Dabei sind Ausnehmungen 50 fluchtend mit den Ausnehmungen 50 der weiteren Elemente für Betriebsmittelrückführungsselemente 51 vorgesehen.

Bei der Ausführungsform der Fig. 11 weist das Befestigungselement 14 dagegen eine schmalere Ringform mit größerem Innendurchmesser auf. Die Ausführungsformen unterscheiden sich außerdem und unabhängig hiervon darin, dass das Befestigungselement 14 der Fig. 10 fest mit der Lagerfassung 10 bzw. dem ersten Bauteil 11 verbunden ist, beispielsweise durch die Schrauben 46 oder auch durch separate Befestigungsmittel. Als separate Befestigungsmittel können beispielsweise auch Kunststoffstopfen vorgesehen sein, welche die Teile lediglich für die Montage zusammenhalten. Mit einer Befestigung des Befestigungselements 14 an der Lagerfassung 10 bzw. dem ersten Bauteil 11 kann die Einführung und Befestigung der Lagerfassung 10 in der Öffnung 16 besonders einfach ausgeführt werden, da das feste Befestigungselement 14 eine an der Lasche 64 aufgebrachte Befestigungskraft bereits relativ gut über den Querschnitt der Lagerfassung verteilt.

Bei der Ausführungsform der Fig. 11 ist das Befestigungselement 14 dagegen nur auf die Lagerfassung 10 aufgelegt. Dies hat jedoch den Vorteil, dass bei der Montage ein entsprechender Befestigungsschritt zwischen Befestigungselement 14 und Lagerfassung 10 bzw. erstem Bauteil 11 entfallen kann.

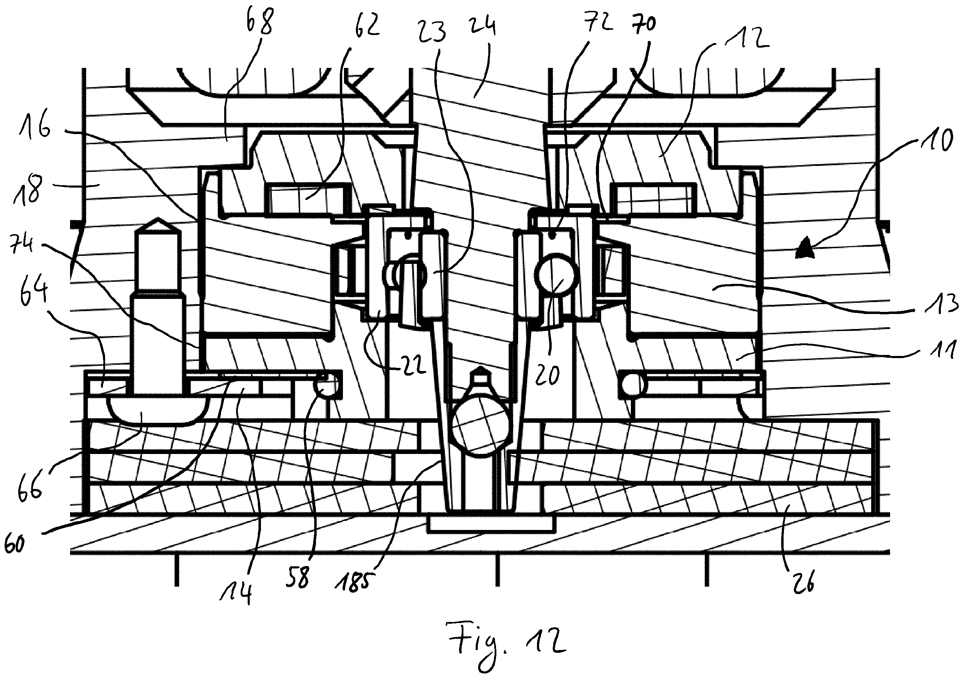

In Fig. 12 ist die Lagerfassung 10 vergrößert gezeigt. Auch hier sind das erste Bauteil 11, das zweite Bauteil 12 und das dritte Bauteil 13 sichtbar. Diese sind mittels des Befestigungselements 14 sowie einer Mehrzahl an Schrauben 66, von denen hier nur eine dargestellt ist, in der Öffnung 16 des Gehäuseelements 18 befestigt und zwar gegen eine Schulter 68 des Gehäuseelements 20.

An einer Stirnseite des dritten Bauteils 13 ist ein Betriebsmitteldurchlass 70 vorgesehen. Dieser ist als umlaufende Ausnehmung und vorliegend als Stufe bzw. Absatz ausgebildet und kann beispielsweise mittels Drehen auf einfache Weise hergestellt werden. Alternativ sind aber beispielsweise auch radial ausgerichtete Ausnehmungen, wie etwa Nuten, denkbar. Der Betriebsmitteldurchlass 70 ermöglicht einen Übergang des Betriebsmittels weg von dem Lagerelement 20 und vorliegend zu dem Betriebsmittelverteilungselement 62. Es wäre beispielsweise auch alternativ oder zusätzlich möglich, dass ein Betriebsmitteldurchlass so ausgebildet ist, dass das Betriebsmittel von dem Lagerelement 20 direkt zum Betriebsmittelrückführungselement 51 gelangen kann. In diesem Zusammenhang kann ein Betriebsmittelverteilungselement 62 insbesondere entbehrlich sein. Es könnte grundsätzlich auch ein Betriebsmitteltransportelement in dem Betriebsmitteldurchlass 70 vorgesehen sein.

Damit das Betriebsmittel das Lagerelement 20 und insbesondere dessen Außenring 22 verlassen kann und zum Betriebsmitteldurchlass 70 gelangen kann, sind im Außenring 22 des Lagers 20 mehrere Öffnungen 72 vorgesehen. Diese sind beispielsweise auch in Fig. 9 am Umfang des Lagerelements 20 gut sichtbar.

Das Betriebsmittel, welches im Betriebsmittelspeicher 26 gespeichert ist, kann also zirkulieren. Von dem Betriebsmittelspeicher 26 wird es über einen konischen Abschnitt, hier einer sogenannten Spritzmutter 185, des Rotors 24 unter Ausnutzung der Fliehkraft zum Lagerelement 20 gefördert, von wo aus es durch die Öffnungen 72 und durch den Betriebsmitteldurchlass 70 zum Betriebsmittelverteilungselement 62 gelangen kann. Von hier aus gelangt das Betriebsmittel über die in den Ausnehmungen 50 (siehe zum Beispiel Fig. 7 und 8) angeordneten Betriebsmittelrückführungsselemente 51 zurück zum Betriebsmittelspeicher 26. Die in den Ausnehmungen 50 angeordneten Betriebsmittelrückführungselemente 51 erstrecken sich dafür von dem Betriebsmittelverteilungselement 62 durch zumindest die Bauteile 11 und 13 hindurch bis hin zu dem Betriebsmittelspeicher 26. Hierdurch wird ein Rücktransport aufgrund der Kapillarkraft erreicht. In der in Fig. 12 gezeigten Ausrichtung bewirkt zwar auch die Schwerkraft einen Rücktransport, jedoch ermöglicht die gezeigte Konstruktion einen Rücktransport auch bei einer anderen Ausrichtung der Pumpe, wie etwa wenn diese in Bezug auf die Fig. 1 und 12 auf der Seite liegt oder auf dem Kopf steht.

Das Befestigungselement 14 bewirkt nicht nur eine vorteilhafte Kraftverteilung von den Schrauben 66 auf die Lagerfassung 10, sondern wirkt auch entsprechend einer Unterlegscheibe, vermeidet also insbesondere Spanbildung und Fressen beim Einschrauben der Schrauben 66. Die Köpfe bzw. Teilsegmente der Köpfe der Schrauben 66 können sich beispielsweise in radialer Richtung auch bis in den Querschnitt des ersten Axialabschnitts 74 der Öffnung 16 bzw. den Querschnitt der Lagerfassung 10 hinein erstrecken. Somit kann eine direkt wirkende axiale Vorspannung ausgeübt werden. Durch die gezeigte Variante wird dagegen die axiale Vorspannung allein über das Befestigungselement 14 umgeleitet und an die Lagerfassung 10 weitergegeben.

Zwischen dem zweiten Bauteil 12 und dem Gehäuseelement 18 bzw. dessen Schulter 68 können ein oder mehrere Ausgleichselemente, wie etwa ein Scheibe, vorgesehen sein. Hierdurch lassen sich eventuell bei der Herstellung der Lagerfassung, insbesondere der Bauteile 11, 12 und 13 auftretende Ungenauigkeiten derart ausgleichen, dass ein Wechsel der Lagerfassung im Wesentlichen ohne Veränderung der axialen Rotorposition erfolgen kann. Die wirkt sich insbesondere an einem Magnetlager positiv aus, da ein solches einer besonders genauen axialen Justierung bedarf. Folglich kann das Wechseln des Wälzlagers hierdurch vereinfacht werden, da keine Einstellung des Magnetlagers nötig ist.

In Fig. 12 ist ferner der O-Ring 58 sichtbar, wie er in Anlage mit der Einstelleinlage 60 angeordnet ist. Der O-Ring 58 hat hier nicht nur die Aufgabe, die in Fig. 14 sichtbaren Betriebsmittelrückrührungselemente 51 in den Ausnehmungen 50 zu halten, sondern auch, die Einstelleinlage 60 vor und während der Montage der Lagerfassung 10 im Gehäuseelement 18 an dieser, hier am ersten Bauteil 11, festzulegen. Dies vereinfacht die Montage weiter. Der O-Ring 58 weist in diesem Beispiel also eine Doppelfunktion auf.

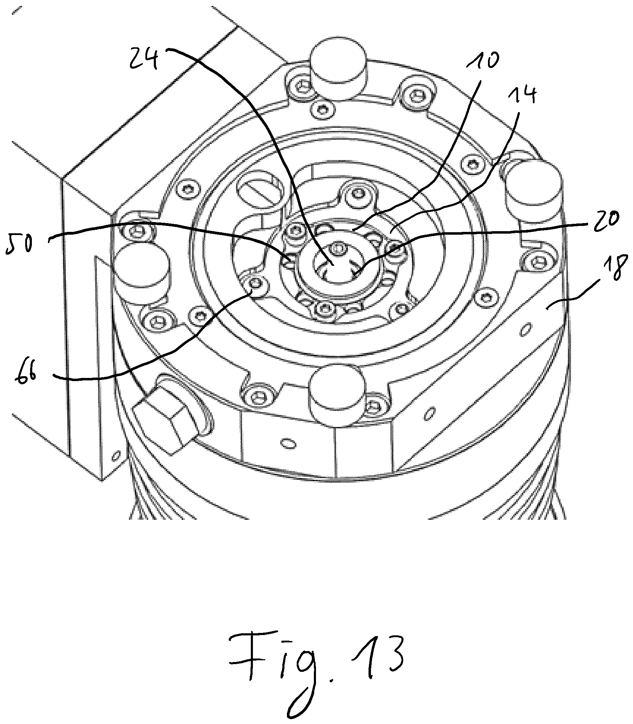

In Fig. 13 ist eine Turbomolekularpumpe von unten gezeigt, wobei eine Lagerfassung 10 in eine Öffnung eines Gehäuseelements 18 eingesetzt ist. Hierfür wird die Lagerfassung 10 bei der Montage einfach in die Öffnung eingesetzt und auf den insbesondere bereits montierten Rotor 24 mit dem Lagerelement 20 aufgesetzt. Das Lagerelement 10 ist mittels eines Befestigungselements 14 sowie mittels Schrauben 66 in der Öffnung befestigt. Das Befestigungselement 14 entspricht dabei der in Fig. 11 gezeigten Ausführungsform ohne vorherige Befestigung an der Lagerfassung 10. Es zeigt sich anhand von Fig. 13, dass in den Öffnungen 50 angeordnete Betriebsmittelrückführungselemente auf einfache Weise ausgetauscht werden können und zwar auch ohne Demontage der Lagerfassung 10. Es müssen nur wenige Elemente demontiert werden, insbesondere ein zum Beispiel in Fig. 1 sichtbarer Deckel 76 und ein Betriebsmittelspeicher 26.

In Fig. 14 ist eine weitere Schnittansicht einer erfindungsgemäßen Turbomolekularpumpe mit einer Lagerfassung 10 gezeigt, wobei der Schnitt so gewählt ist, dass Ausnehmungen 50 im ersten Bauteil 11 und im dritten Bauteil 13 und hierin angeordnete Betriebsmittelrückführungselemente 51 sichtbar sind. In diese Ausnehmungen 50 lassen sich auf einfache Weise diese zum Beispiel zylindrischen Betriebsmittelrückführungselemente 51 einsetzen, welche insbesondere aus Filz oder einem anderen, kapillar wirkenden Material hergestellt sein können und/oder die sich insbesondere vom Betriebsmittelverteilungselement 62 bis hin zu dem Betriebsmittelspeicher 26 erstrecken. Die Betriebsmittelrückführungselemente 51 können beispielsweise als Stäbe ausgeführt sein.

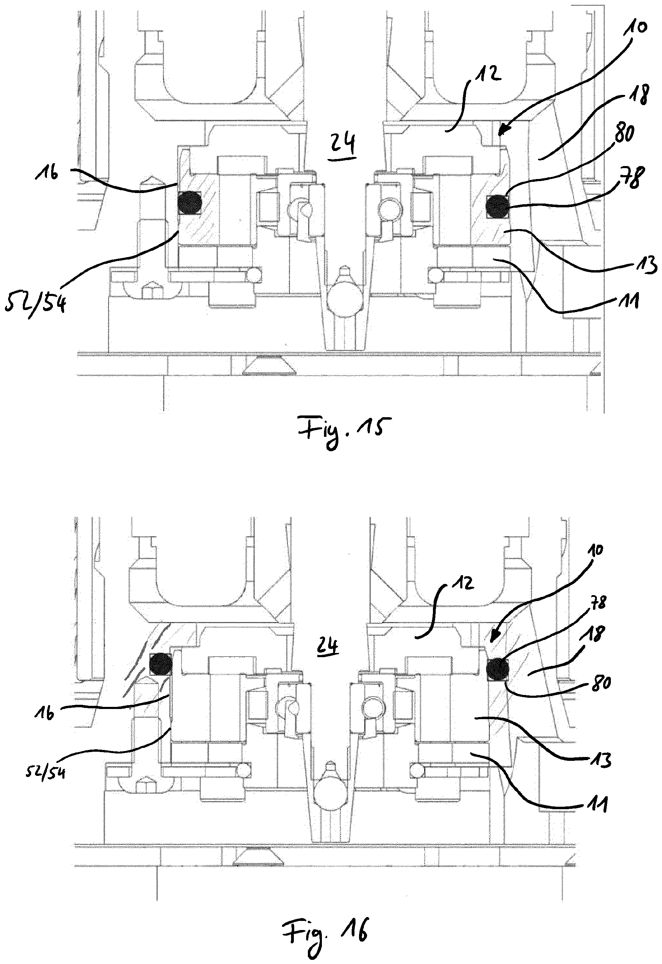

In Fig. 15 ist eine weitere Ausführungsform einer wiederum beispielhaft als Turbomolekularpumpe ausgebildeten Vakuumpumpe gezeigt. Es ist eine Lagerfassung 10 mit einem ersten Bauteil 11, einem zweiten Bauteil 12 und einem dritten Bauteil 13 sichtbar, welche in einem Gehäuseelement 18 gelagert ist. Zwischen der Lagerfassung 10, bevorzugt wie gezeigt zwischen dem dritten Bauteil 13, und dem Gehäuseelement 18 ist ein Dämpfungs- und/oder Zentrierungselement vorgesehen, welches beispielsweise als O-Ring 78 ausgebildet sein kann. Der O-Ring 78 ist in einer Ausnehmung 80 angeordnet und in dieser axial gehalten.

Die Ausnehmung 80 ist in dieser Ausführungsform in der Lagerfassung 10, bevorzugt wie hier in dem dritten Bauteil 13, vorgesehen. Die Ausführungsform der Fig. 16 umfasst ebenfalls einen O-Ring 78, wobei hier jedoch die Ausnehmung 80 im Gehäuseelement 18 vorgesehen ist. Das jeweilige Element, welches die Ausnehmung 80 aufweist, ist durch Schraffur hervorgehoben.

Den Ausführungsformen der Fig. 15 und 16 ist ferner gemein, dass die Ausnehmung 80 jeweils axial beabstandet zu einer Zentierung angeordnet ist, welche hier durch einen Zentrierumfang 52 des dritten Bauteils und einen Zentrierinnenumfang der Öffnung 16 bzw. des Gehäuseelements 18 realisiert ist.

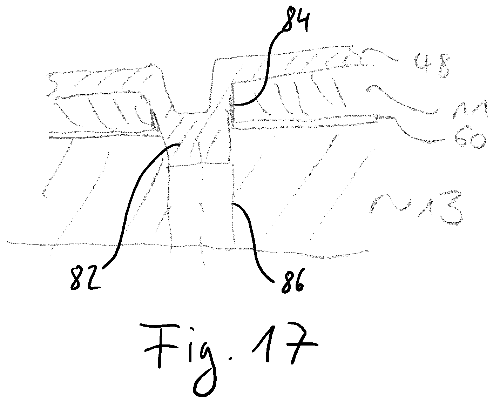

In Fig. 17 ist eine alternative Ausführungsform für eine Befestigung des ersten Bauteils 11 an dem dritten Bauteil 13 gezeigt. Hier ist in einer Scheibe 48 ein Vorsprung 82 vorgesehen, der durch Verformung der Scheibe 48 ausgebildet ist. Der Vorsprung 82 erstreckt sich durch eine Ausnehmung 84 des ersten Bauteils 11 hindurch und in eine Ausnehmung 86 des dritten Bauteils hinein. Der Vorsprung ist in die Ausnehmung 86 hineingeformt und geht mit dieser eine reibschlüssige Verbindung in einer in Fig. 17 vertikalen Richtung ein. Der Vorsprung 82 hält so das erste Bauteil 11 an dem dritten Bauteil 13. Ein Vorsprung 82 muss ferner nicht Teil der Scheibe 48 sein, sondern kann beispielsweise auch als separater Stopfen ausgeführt sein.

Gemäß dem Ausführungsbeispiel der Fig. 17 lassen sich auch andere Element, insbesondere wenigstens zwei von erstem Bauteil 11, zweiten Bauteil 12 und drittem Bauteil 13, miteinander verbinden. Ein Vorsprung 82 kann beispielsweise eine Schraube 46 als Befestigungsmittel ersetzen oder zusätzlich vorgesehen sein.

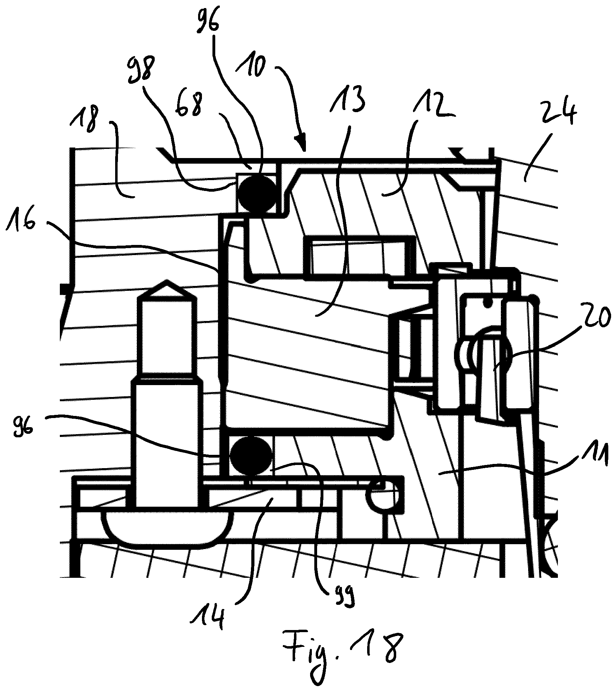

Fig. 18 zeigt eine weitere Ausführungsform einer Lagerfassung 10 mit Bauteilen 11, 12 und 13, welche in einer Öffnung 16 eines Gehäuseelements 18 angeordnet sind. Bis auf die nachfolgend beschriebenen Besonderheiten sind die Elemente entsprechend zur Ausführungsform gemäß Fig. 6 ausgeführt und auch die Schnittansicht ist entsprechend gewählt.

An der Schulter 68 des Gehäuseelements 18 ist die Lagerfassung 10 gelagert, doch anders als in Fig. 6 ist zwischen Gehäuseelement 18 und Lagerfassung 10 bzw. dem zweiten Bauteil 12 ein Dämpfungselement angeordnet, welches hier beispielhaft als O-Ring 96 ausgebildet ist. Der O-Ring ist dafür in einer Ausnehmung 98 angeordnet. Grundsätzlich kann der O-Ring aber beispielsweise auch ohne Ausnehmung vorgesehen oder es kann alternativ oder zusätzlich eine Ausnehmung an der Lagerfassung 10 bzw. dem zweiten Bauteil vorgesehen sein.

Ein weiterer O-Ring 96, welcher auch hier ein beispielhaftes Dämpfungselement bildet, ist so angeordnet, dass er gleich mehrere Elemente dämpft. Hierzu ist er in einem Freiraum 99 angeordnet ist. In axialer Richtung liegen am O-Ring 98 das dritte Bauteil 13 einerseits sowie das Befestigungselement 14 bzw. eine optionale Einstelleinlage 60 andererseits an. In radialer Richtung liegen einerseits das erste Bauteil 11 und andererseits das Gehäuseelement 18 an. Die O-Ringe 98 sorgen für eine vorteilhaft verbesserte Schwingungsentkopplung der Elemente.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 128: Serviceanschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung
- 10: Lagerfassung
- 11: erstes Bauteil
- 12: zweites Bauteil
- 13: drittes Bauteil
- 14: Befestigungselement
- 16: Öffnung
- 18: Gehäuseelement
- 20: Lagerelement
- 22: Außenring
- 23: Innenring
- 24: Rotor
- 26: Betriebsmittelspeicher
- 28: Motor
- 30: Pumpaktiver Teilbereich
- 32: Begrenzung axial
- 34: Begrenzung axial
- 36: Dämpfungselement

- 38: Notanschlag
- 40: Begrenzung radial
- 42: Dämpfungselement
- 44: Notanschlag
- 46: Schraube
- 48: Scheibe
- 50: Ausnehmung
- 51: Betriebsmittelrückführungselement
- 52: Zentrierumfang
- 54: Zentrierinnenumfang
- 56: Ausnehmung
- 58: O-Ring
- 60: Einstelleinlage
- 62: Betriebsmittelverteilungselement
- 64: Lasche
- 66: Schraube
- 68: Schulter
- 70: Betriebsmitteldurchlass
- 72: Öffnung
- 74: Axialabschnitt
- 76: Deckel
- 78: O-Ring
- 80: Ausnehmung
- 82: Vorsprung
- 84: Ausnehmung
- 86: Ausnehmung
- 96: O-Ring
- 98: Ausnehmung
- 99: Freiraum

## Patentansprüche

1. Vakuumpumpe, insbesondere Turbomolekularpumpe, mit einem Gehäuseelement (18),
einem Rotor (24), der mit seiner Längserstreckung eine axiale Richtung definiert, und
einem für den Rotor (24) vorgesehenen Lagerelement (20),
wobei das Lagerelement (20) in einer Öffnung (16) des Gehäuseelements (18) angeordnet ist,
wobei zur Positionierung des Lagerelements (20) relativ zum Gehäuseelement (18) wenigstens ein vom Gehäuseelement (18) separates erstes Bauteil (11) vorgesehen ist,
wobei die Öffnung (16) wenigstens einen ersten zylindrischen Axialabschnitt (74) mit konstantem Querschnitt aufweist,
wobei das erste Bauteil (11) im ersten Axialabschnitt (74) der Öffnung (16) angeordnet ist, wobei das erste Bauteil (11) mit seinem Querschnitt radial ausschließlich innerhalb des Querschnitts der Öffnung (16) im ersten Axialabschnitt (74) angeordnet ist,
wobei das erste Bauteil (11) mittels wenigstens eines platten- und/oder scheibenförmigen Befestigungselements (14) in der Öffnung (16) befestigt ist, und
wobei sich das Befestigungselement (14) radial sowohl innerhalb des Querschnitts als auch außerhalb des Querschnitts des ersten Axialbereiches (74) erstreckt.

2. Vakuumpumpe nach Anspruch 1, wobei das Befestigungselement (14) als Blech- und/oder Stanzteil ausgebildet ist.

3. Vakuumpumpe nach Anspruch 1 oder 2, wobei das Befestigungselement (14) ringförmig ausgebildet ist und/oder eine Mehrzahl an, insbesondere radialen, Vorsprüngen (64) aufweist.

4. Vakuumpumpe nach wenigstens einem der vorhergehenden Ansprüche, wobei das Befestigungselement (14) zusätzlich am ersten Bauteil (11) befestigt ist und/oder lediglich zum ersten Bauteil (11) hin anliegt.

5. Vakuumpumpe nach wenigstens einem der vorhergehenden Ansprüche, wobei das erste Bauteil (11) eine axiale Begrenzung (32) für das Lagerelement (20) bildet.

6. Vakuumpumpe nach wenigstens einem der vorhergehenden Ansprüche, wobei ein Betriebsmittelspeicher (26) für das Lagerelement (20) vorgesehen ist, der aus Sicht des ersten Bauteils (11) axial jenseits des Befestigungselements (14) angeordnet ist.

7. Vakuumpumpe nach einem der vorstehenden Ansprüche,
wobei zur Positionierung des Lagerelements (20) relativ zum Gehäuseelement (18)
eine radiale Begrenzung (40),
eine erste axiale Begrenzung (32) und
eine zweite, der ersten entgegengesetzte, axiale Begrenzung (34) vorgesehen sind,
wobei die drei Begrenzungen (40, 32, 34) von jeweils separat voneinander ausgebildeten Bauteilen (11, 12, 13) gebildet sind.

8. Vakuumpumpe nach Anspruch 7, wobei die erste axiale Begrenzung (32) von dem ersten Bauteil (11) gebildet ist, welches von dem Gehäuseelement (18) separat ausgebildet ist, und/oder dass die zweite axiale Begrenzung (34) von einem zweiten Bauteil (12) gebildet ist, welches von dem Gehäuseelement (18) und insbesondere dem ersten Bauteil (11) separat ausgebildet ist,
und/oder dass die radiale Begrenzung (40) von einem dritten Bauteil (13) gebildet ist, welches separat vom Gehäuseelement und insbesondere separat vom ersten und/oder zweiten Bauteil (11, 12) ausgebildet ist.

9. Vakuumpumpe nach Anspruch 7 oder 8, wobei die Bauteile (11, 12, 13) eine aus der Öffnung (16) herausnehmbare Lagerfassung (10) bilden.

10. Vakuumpumpe nach wenigstens einem der Ansprüche 7 bis 9, wobei wenigstens zwei der Bauteile (12, 13) mittels einer Presspassung verbunden sind.

11. Vakuumpumpe nach wenigstens einem der Ansprüche 7 bis 10, wobei wenigstens eine der Begrenzungen (32, 34, 40) ein Dämpfungselement (36, 42) und einen Notanschlag (38, 44) für das Lagerelement (20) umfasst, welche an demselben Bauteil (12, 13) angeordnet sind.

12. Vakuumpumpe nach wenigstens einem der Ansprüche 7 bis 11, wobei ein Betriebsmittelspeicher (26) für das Lagerelement (20) vorgesehen ist und der Betriebsmittelspeicher (26) axial außerhalb der Bauteile (11, 12, 13) angeordnet ist.

13. Vakuumpumpe nach wenigstens einem der Ansprüche 7 bis 11, wobei die Bauteile (11, 12, 13) jeweils wenigstens eine Ausnehmung (50, 56) aufweisen, worin ein Betriebsmitteltransportelement (51, 62) angeordnet ist, welches fluidisch mit einem Betriebsmittelspeicher (26) verbunden ist.

14. Vakuumpumpe nach wenigstens einem der Ansprüche 7 bis 13, wobei ein radialer Betriebsmitteldurchlass (70) an einer Stirnseite eines der Bauteile (13) ausgebildet ist.

15. Vakuumpumpe nach wenigstens einem der Ansprüche 7 bis 14, wobei zwischen den Bauteilen wenigstens eine Einstelleinlage (60) zur Einstellung des Abstands zwischen den axialen Begrenzungen (32, 34) angeordnet ist.

## Claims

1. A vacuum pump, in particular a turbomolecular pump, comprising a housing element (18);
a rotor (24) which defines an axial direction with its longitudinal extent; and a bearing element (20) provided for the rotor (24),
wherein the bearing element (20) is arranged in an opening (16) of the housing element (18);
wherein at least a first component (11) which is separate from the housing element (18) is provided for positioning the bearing element (20) relative to the housing element (18);
wherein the opening (16) has at least a first cylindrical axial section (74) having a constant cross-section;
wherein the first component (11) is arranged in the first axial section (74) of the opening (16);
wherein the first component (11) is arranged with its cross-section radially solely within the cross-section of the opening (16) in the first axial section (74);
wherein the first component (11) is fastened in the opening (16) by means of at least one plate-shaped and/or disk-shaped fastening element (14); and wherein the fastening element (14) extends radially both within the cross-section and outside the cross-section of the first axial region (74).

2. A vacuum pump in accordance with claim 1,
wherein the fastening element (14) is formed as a sheet metal part and/or a stamped part.

3. A vacuum pump in accordance with claim 1 or claim 2,
wherein the fastening element (14) is annular and/or has a plurality of projections (64), in particular radial projections (64).

4. A vacuum pump in accordance with at least one of the preceding claims, wherein the fastening element (14) is additionally fastened to the first component (11) and/or merely abuts toward the first component (11).

5. A vacuum pump in accordance with at least one of the preceding claims, wherein the first component (11) forms an axial boundary (32) for the bearing element (20).

6. A vacuum pump in accordance with at least one of the preceding claims, wherein an operating medium store (26) is provided for the bearing element (20) and is arranged axially beyond the fastening element (14) from the point of view of the first component (11).

7. A vacuum pump in accordance with any one of the preceding claims,
wherein
a radial boundary (40),
a first axial boundary (32) and
a second axial boundary (34), which is disposed opposite said first axial boundary (32), are provided for positioning the bearing element (20) relative to the housing element (18),
wherein the three boundaries (40, 32, 34) are formed by components (11, 12, 13) which are each formed separately from one another.

8. A vacuum pump in accordance with claim 7,
wherein the first axial boundary (32) is formed by the first component (11) which is formed separately from the housing element (18); and/or in that the second axial boundary (34) is formed by a second component (12) which is formed separately from the housing element (18) and is in particular formed separately from the first component (11);
and/or in that the radial boundary (40) is formed by a third component (13) which is formed separately from the housing element and is in particular formed separately from the first and/or second component (11, 12).

9. A vacuum pump in accordance with claim 7 or claim 8,
wherein the components (11, 12, 13) form a bearing mount (10) which is removable from the opening (16).

10. A vacuum pump in accordance with at least one of the claims 7 to 9, wherein at least two of the components (12, 13) are connected by means of a press fit.

11. A vacuum pump in accordance with at least one of the claims 7 to 10, wherein at least one of the boundaries (32, 34, 40) comprises a damping element (36, 42) and an emergency stop (38, 44) for the bearing element (20), said damping element (36, 42) and emergency stop (38, 44) being arranged at the same component (12, 13).

12. A vacuum pump in accordance with at least one of the claims 7 to 11, wherein an operating medium store (26) is provided for the bearing element (20) and the operating medium store (26) is arranged axially outside the components (11, 12, 13).

13. A vacuum pump in accordance with at least one of the claims 7 to 11, wherein the components (11, 12, 13) each have at least one recess (50, 56) in which an operating medium transport element (51, 62) is arranged which is fluidically connected to an operating medium store (26).

14. A vacuum pump in accordance with at least one of the claims 7 to 13, wherein a radial operating medium passage (70) is formed at an end face of one of the components (13).

15. A vacuum pump in accordance with at least one of the claims 7 to 14, wherein at least one adjustment insert (60) for adjusting the spacing between the axial boundaries (32, 34) is arranged between the components.

## Revendications

1. Pompe à vide, en particulier pompe turbomoléculaire, comportant un élément de carter (18),
un rotor (24) dont l'extension longitudinale définit une direction axiale, et un élément de palier (20) prévu pour le rotor (24),
dans laquelle
l'élément de palier (20) est disposé dans une ouverture (16) de l'élément de carter (18),
il est prévu au moins un premier composant (11) séparé de l'élément de carter (18) pour positionner l'élément de palier (20) par rapport à l'élément de carter (18),
l'ouverture (16) présente au moins une première portion axiale cylindrique (74) de section transversale constante;
le premier composant (11) est disposé dans la première portion axiale (74) de l'ouverture (16),
le premier composant (11) est disposé, avec sa section transversale, radialement exclusivement à l'intérieur de la section transversale de l'ouverture (16) dans la première portion axiale (74),
le premier composant (11) est fixé dans l'ouverture (16) au moyen d'au moins un élément de fixation (14) en forme de plaque et/ou de disque, et l'élément de fixation (14) s'étend radialement aussi bien à l'intérieur de la section transversale qu'à l'extérieur de la section transversale de la première portion axiale (74).

2. Pompe à vide selon la revendication 1,
dans laquelle
l'élément de fixation (14) est réalisé sous forme de pièce en tôle et/ou de pièce découpée.

3. Pompe à vide selon la revendication 1 ou 2,
dans laquelle
l'élément de fixation (14) est réalisé en forme annulaire et/ou présente une pluralité de saillies (64), en particulier radiales.

4. Pompe à vide selon l'une au moins des revendications précédentes,
dans laquelle
l'élément de fixation (14) est fixé en supplément au premier composant (11) et/ou ne fait que s'appuyer contre le premier composant (11).

5. Pompe à vide selon l'une au moins des revendications précédentes,
dans laquelle
le premier composant (11) constitue une délimitation axiale (32) pour l'élément de palier (20).

6. Pompe à vide selon l'une au moins des revendications précédentes,
dans laquelle
un réservoir de fluide de fonctionnement (26) est prévu pour l'élément de palier (20) et est disposé axialement au-delà de l'élément de fixation (14), vu depuis le premier composant (11).

7. Pompe à vide selon l'une des revendications précédentes,
dans laquelle
en vue de positionner l'élément de palier (20) par rapport à l'élément de carter (18), il est prévu
une délimitation radiale (40),
une première délimitation axiale (32), et
une seconde délimitation axiale (34) opposée à la première délimitation, les trois délimitations (40, 32, 34) étant formées par des composants (11, 12, 13) réalisés chacun séparément les uns des autres.

8. Pompe à vide selon la revendication 7,
dans laquelle
la première délimitation axiale (32) est formée par le premier composant (11) qui est réalisé séparément de l'élément de carter (18),
et/ou la seconde délimitation axiale (34) est formée par le second composant (12) qui est réalisé séparément de l'élément de carter (18) et en particulier séparément du premier composant (11),
et/ou la délimitation radiale (40) est formée par un troisième composant (13) qui est réalisé séparément de l'élément de carter et en particulier séparément du premier et/ou du second composant (11, 12).

9. Pompe à vide selon la revendication 7 ou 8,
dans laquelle
les composants (11, 12, 13) forment un coussinet de palier (10) qui peut être retiré de l'ouverture (16).

10. Pompe à vide selon l'une au moins des revendications 7 à 9,
dans laquelle
au moins deux des composants (12, 13) sont reliés à l'aide d'un ajustement serré.

11. Pompe à vide selon l'une au moins des revendications 7 à 10,
dans laquelle
l'une au moins des délimitations (32, 34, 40) comprend un élément d'amortissement (36, 42) et une butée d'urgence (38, 44) pour l'élément de palier (20), qui sont disposés sur le même composant (12, 13).

12. Pompe à vide selon l'une au moins des revendications 7 à 11,
dans laquelle
un réservoir de fluide de fonctionnement (26) est prévu pour l'élément de palier (20), et le réservoir de fluide de fonctionnement (26) est disposé axialement à l'extérieur des composants (11, 12, 13).

13. Pompe à vide selon l'une au moins des revendications 7 à 11,
dans laquelle
les composants (11, 12, 13) présentent chacun au moins un évidement (50, 56) dans lequel est disposé un élément de transport de fluide de fonctionnement (51, 62) qui est en communication fluidique avec un réservoir de fluide de fonctionnement (26).

14. Pompe à vide selon l'une au moins des revendications 7 à 13,
dans laquelle
un passage radial de fluide de fonctionnement (70) est réalisé sur une face frontale de l'un des composants (13).

15. Pompe à vide selon l'une au moins des revendications 7 à 14,
dans laquelle
au moins un insert de réglage (60) est disposé entre les composants pour régler la distance entre les délimitations axiales (32, 34).
